# NEUE EUROPÄISCHE PATENTSCHRIFT

(11) **EP 2 111 120 B2**
(45) Veröffentlichungstag und Bekanntmachung des Hinweises auf die Entscheidung über den Einspruch: **25.02.2026**
(45) Hinweis auf die Patenterteilung: 18.07.2018
(21) Anmeldenummer: 08707190.8
(22) Anmeldetag: 22.01.2008
(51) Int. Cl.: A23G 3/02, F04B 7/06, A23G 3/20, A23G 1/00, A23G 1/20, A23G 3/34

(54) **VORRICHTUNG ZUM DOSIERTEN ZUFÜHREN EINER FLIESSFÄHIGEN MASSE**
DEVICE FOR METERING OUT A FLOWABLE MASS
DISPOSITIF D'AMENÉE DOSÉE D'UNE MASSE FLUIDE

(30) Priorität: 22.01.2007 DE 102007011015
(43) Veröffentlichungstag der Anmeldung: 28.10.2009
(73) Patentinhaber: Knobel, Guido, 8268 Salenstein (CH)
(72) Erfinder: KNOBEL, Guido, 8552 Felben (CH)
(74) Vertreter: Patentanwälte und Rechtsanwalt Weiß, Arat & Partner mbB
(86) Internationale Anmeldenummer: PCT/EP2008/000460
(87) Internationale Veröffentlichungsnummer: WO 2008/089954

(56) Entgegenhaltungen:
- DE-A1- 1 936 358
- DE-A1- 102005 004 785
- DE-A1- 102005 018 503
- DE-A1- 2 409 610
- DE-A1- 3 412 628
- DE-A1- 3 630 528
- DE-B1- 1 607 796
- US-A- 3 605 645
- US-A- 4 854 837
- US-A- 5 482 448

## Beschreibung

Die Erfindung betrifft eine Vorrichtung zum dosierten Zuführen einer fliessfähige Masse, insbesondere einer fetthaltigen Masse zur Herstellung von Produkten im Confiseriebereich, nach Oberbegriff von Anspruch 1.

### STAND DER TECHNIK

Beispielsweise Pralinen bestehen in vielen Fällen aus einem Schokoladenmantel und einer beliebigen Füllung und werden heute im industriellen Bereich automatisch in der sogenannten One-Shot-Technologie hergestellt. In diesem Verfahren wird in eine Form durch eine einzige Düse, beispielsweise durch einen Ringkanal, die Schokolade eingebracht und gleichzeitig durch eine Axialbohrung eine Füllung, wobei die Füllung den Schokoladenmantel gegen die Formwand drückt und so durch einen einzigen "Schuss" eine geschlossene Praline aus Mantel mit Füllung hergestellt wird.

Die entsprechenden Substanzen für den Mantel und die Füllung werden mittels Pumpen zu den Düsen gebracht, wobei jeweils einer Düse an einem Düsenbalken eine Pumpe zugeordnet ist. Diese Reihen von Pumpen sind wiederum mit einem einzigen Hubbalken verbunden, so dass die Hubbewegung der Pumpenstössel durch die Bewegung des Hubbalkens erfolgt. Im Hubbalken sitzen auch Drehelemente, welche den Pumpenstössel jeweils um 180° drehen.

Aus der US 4 854 837 A ist eine Pumpe bekannt, bei der zwischen zwei Statoren ein Rotor vorgesehen ist. Dabei bewegt sich dieser Rotor entsprechend ausgestalteten wellenförmigen Oberflächen der Statoren und bewirkt so einen Pumpvorgang. Ein separater Drehkolben, der mit einem Stössel zusammenwirkt, ist nicht vorgesehen.

Derartige Anordnungen sind beispielsweise in der DE 297 06 282 U1 und der DE 199 34 106 A1 beschrieben. Die fliessfähige Masse gelangt durch eine Eintrittsöffnung in einen Dosierraum, welcher dadurch gebildet ist, dass ein Teil des Pumpenstössels achsparallel weggeschnitten und in diesem Bereich eingestochen ist. Hierdurch entsteht in dem Pumpenstössel eine begrenzte Mulde, zwischen der und einer Innenwand einer Pumpe eine bestimmte Substanzmenge aufgenommen werden kann. Sobald der Dosierraum und ein Raum zwischen dem Boden des Zylinderraums und der Stirnfläche des Pumpenstössels mit Substanz gefüllt ist, wird der Pumpenstössel um 180° gedreht, so dass die Mulde einer Austrittsöffnung zugeordnet ist. Wird jetzt der Pumpenstössel tiefer in den Zylinderraum hineingestossen, so wird der Raum zwischen Stirnfläche und des Pumpenstössels und dem Boden des Zylinderraums verkleinert, so dass die Substanz aus diesem Raum in die Mulde gedrückt wird und eine entsprechende Menge an Substanz durch die Austrittsöffnung gelangt. Eine weitere Vorrichtung zum dosierten Abfüllen von fließfähigem Füllgut ist aus DE 34 12 628 A1 bekannt.

### AUFGABE

Aufgabe der vorliegenden Erfindung ist eine Verbesserung der Dosierung der fliessfähigen Masse und eine Erleichterung des Einbringens der fliessfähigen Masse in die Zylinderkammer und aus der Zylinderkammer, wobei sich in der fliessfähigen Masse auch grössere Objekte befinden können.

### LÖSUNG DER AUFGABE

Zur Lösung der Aufgabe führen die Merkmale von Anspruch 1.

Das bedeutet, dass beim Drehen des Drehkolbens die Ausnehmung immer mit der gleichen Öffnung zum Stössel bzw. dessen Stirnkante hin geöffnet bleibt. Insoweit ist es auch möglich, die Ausnehmung so zu vergrössern, dass fliessfähige Masse mit grösseren Objekten, wie bspw. Nüssen, besser gefördert werden können. Herstellungstechnisch hat es sich hier als ratsam erwiesen, die Ausnehmung als offenen Schlitz auszubilden.

Die Ausnehmung in dem Drehkolben hat somit eine bestimmte Form. Sie besitzt eine muschelartige Innenwölbung, die gegenüber dem Stössel von einer hufeisenartigen Stirnkante begrenzt wird. Von den Ecken der Stirnkante verlaufen dann Seitenkanten nach hinten und vereinigen sich. Diese muschelartige Innenwölbung hat zum einen den Vorteil, dass die fliessfähige Masse, wenn sie von dem Pumpenstössel unter Druck gesetzt wird, direkt zur Austrittsöffnung hin geleitet wird. Die Stirnkante selbst bietet der fliessfähigen Masse kaum einen Widerstand, zumal die Stirnkante schneidenartig angefast ist.

Die geraden Seitenkanten haben ferner den Vorteil, dass sie, da sie ebenfalls angefast sind, messerartig einen Strang der fliessfähigen Masse sowohl bei Eintrittsöffnung als auch bei Austrittsöffnung abschneiden. Welche Form die Eintritts- bzw. Austrittsöffnungen aufweisen, ist von untergeordneter Bedeutung. Sie kann rund aber vor allem auch oval sein.

In einem einfachen Ausführungsbeispiel stösst der Stössel mit seiner Stirnfläche direkt an dem Drehkolben bzw. dessen Stirnkante an. Dies ist allerdings etwas nachteilig, da sich in der Ausnehmung des Drehkolbens noch sehr viel Material befindet, welches nicht aus der Ausnehmung gefördert wird. Um diese Toträume zu verkleinern, ist vorgesehen, dass der Stössel oder ein Teil des Stössels zumindest teilweise in die Ausnehmung eingreift. In einem einfachen Ausführungsbeispiel kann hierfür der Stirnfläche des Stössels ein Aufsatz aufgesetzt sein, der in die Ausnehmung passt.

Bei einem anderen Ausführungsbeispiel der Erfindung besteht die Möglichkeit, dass das Pumpengehäuse im Inneren eine Ringkante ausbildet. An diese Ringkante stösst der Drehkolben an. Bis zu dieser Ringkante weist der Drehkolben einen Aussendurchmesser auf, der dem entsprechenden Innendurchmesser der Kammer in dem Pumpengehäuse vor der Ringkante entspricht. Der Stössel dagegen weist einen verringerten Aussendurchmesser auf, der dem Innendurchmesser der Kammer in dem Pumpengehäuse nach der Ringkante entspricht. Auf diese Weise kann der Stössel in einem gewissen Umfang in die Ausnehmung einfahren.

Die oben erwähnte Ringkante braucht nicht direkt spanabhebend in das Pumpengehäuse eingeformt zu sein. Sie kann auch durch eine separate Hülse gebildet werden. Des weiteren könnte sie dadurch gebildet werden, dass der Stössel zweiteilig ausgebildet ist und zwar mit einem Aussenstössel, der in diesem Fall hülsenförmig ist, und einem Innenstössel, der in dem Aussenstössel bewegbar ist und mit seinem vorderen Bereich über den Aussenstössel hinaus in die Ausnehmung des Drehkolbens eingreift.

In einem bevorzugten Beispiel soll eine Drehachse des Drehkolbens in einer Achse des Stössels verlaufen. Dort wird sogar bevorzugt, dass die Drehachse des Drehkolbens und die Achse des Stössels in einer Längsachse einer Kammer des Pumpengehäuses verlaufen.

Das bedeutet, dass die gesamte Pumparbeit auf Stössel und Drehkolben verteilt wird. Hierdurch wird insbesondere die Handhabung des Stössels erleichtert und die notwendige Energie für die Pumpbewegung verringert. Ferner wird ein genaueres Dosieren möglich. Der Stössel bildet eine abgeschlossene Stirnkante und der Drehkolben gegenüberliegend durch seine stationäre Anordnung in dem Pumpengehäuse ebenfalls ein genau definiertes begrenztes Gegenlager zu der Stirnfläche des Stössels. Ist durch eine entsprechende Drehbewegung des Drehkolbens beispielsweise die Eintrittsöffnung offen, so saugt die Bewegung des Stössels weg von dem Drehkolben eine exakte Menge an fliessfähiger Masse in die Zylinderkammer, während beim Stand der Technik die fliessfähige Masse zumindest teilweise selbst unter Druck gesetzt werden muss, um die gesamte Mulde in dem Pumpenstössel auszufüllen.

Wird nun zum Ausstossen der fliessfähigen Masse der Drehkolben gedreht und gibt die Austrittsöffnung frei, so kann durch die glatte Stirnfläche des Kolbens eine exakt definierte Menge an fliessfähiger Masse aus der Austrittsöffnung ausgestossen werden. Entgegen dem Stand der Technik wird somit durch die vorliegende Erfindung die fliessfähige Masse in der Zylinderkammer nicht hin und hergeschoben, sondern sie wird durch den Stössel in die Zylinderkammer eingesaugt und durch die Austrittsöffnung wieder ausgestossen. Hierdurch wird das Dosieren wesentlich verbessert und die Kraftaufnahme des Stössels vermindert. Zudem verbleibt nicht fliessfähige Masse über längere Zeit in der Zylinderkammer, wie dies im vorderen Bereich der Stösselmulde gemäss dem Stand der Technik möglich war.

Bevorzugt soll das Pumpengehäuse zusammen mit dem Drehkolben und der Antriebseinheit für den Drehkolben ortsfest gelagert sein. In diesem Fall wird nur der Stössel in Richtung der Längsachse des Pumpengehäuses bewegt. Im Rahmen der Erfindung liegt aber auch die Bewegung von Drehkolben und Stössel relativ zueinander oder sogar die Anordnung des Stössels ortsfest und die Bewegung des Drehkolbens in Längsachse des Pumpengehäuses zusammen mit seiner Antriebseinheit. Jede dieser Möglichkeiten soll von der Erfindung umfasst sein. Gemäß der Erfindung schliesst an den Drehkolben ein Zahnrad an, welches mit einer bewegbaren Zahnstange in Eingriff steht. Hierdurch wird die Drehbewegung des Drehkolbens veranlasst.

Da in der Regel eine Mehrzahl von Pumpengehäusen zu einer Pumpenorgel zusammengefasst sind, wird es sich als ratsam erweisen, den entsprechenden Drehkolben einen gemeinsamen Antrieb und den entsprechenden Pumpenstössel einen gemeinsamen Hubbalken zuzuordnen.

### FIGURENBESCHREIBUNG

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
Figur 1 eine teilweise durchscheinend dargestellte perspektivische Ansicht einer erfindungsgemässen Vorrichtung zum dosierten Zuführen einer fliessfähigen Masse;
Figur 2 eine Draufsicht auf die Vorrichtung gemäss Figur 1;
Figur 3 einen vergrössert dargestellten Querschnitt durch Figur 2 mit einem Drehkolben in einer Gebrauchslage;
Figur 4 einen vergrössert dargestellten Querschnitt durch Figur 2 mit dem Drehkolben in einer anderen Gebrauchslage;
Figur 5 bis 7 schematisch dargestellte Längsschnitte durch weitere Ausführungsformen von Pumpen in jeweils zwei unterschiedlichen Gebrauchslagen.

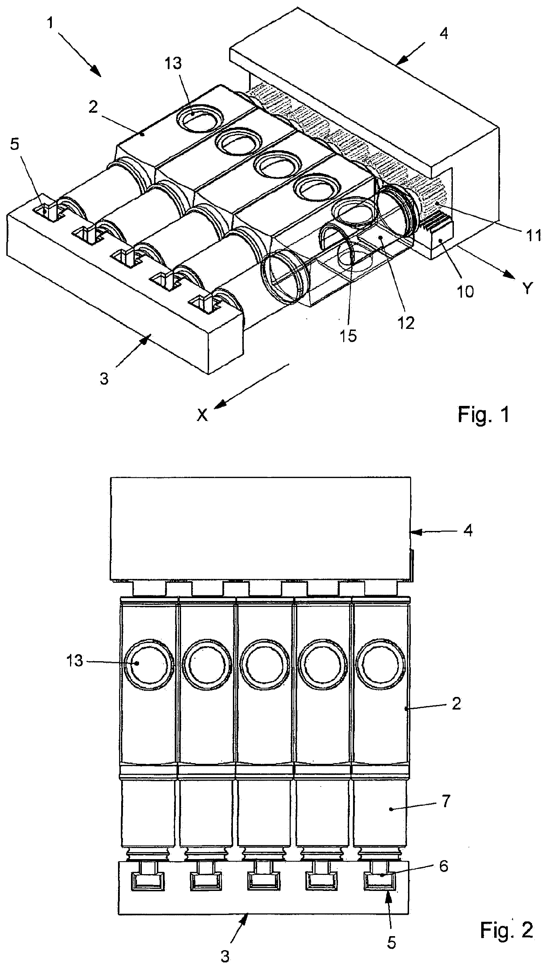

In den Figuren 1 und 2 ist eine Pumpenorgel 1 bestehen aus einer Mehrzahl von nebeneinander liegenden Pumpengehäuse 2 gezeigt. Diese Pumpenorgel 1 befindet sich zwischen einem in Richtung x bewegbaren Hubbalken 3 und einem Antriebsbalken 4.

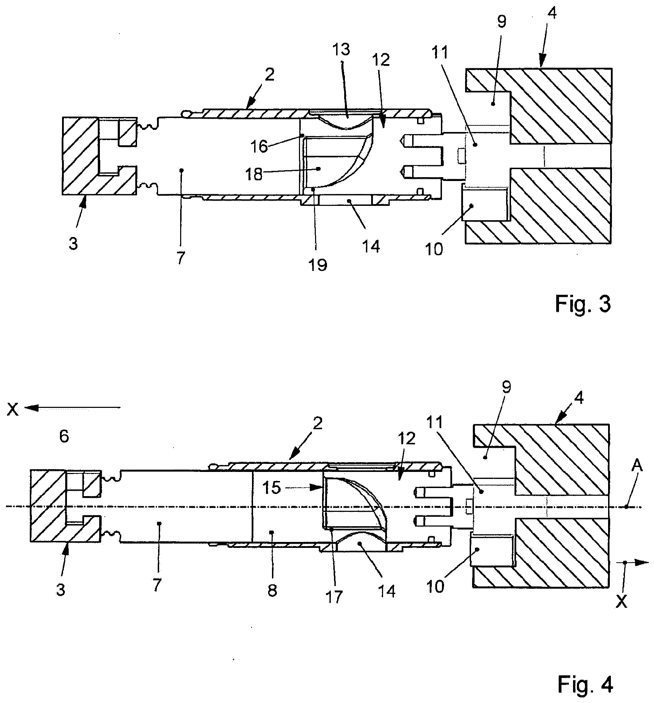

Der Hubbalken 3 weist eine Mehrzahl von T-förmigen Nuten 5 auf, welche jeweils der Aufnahme eines T-förmigen Nutensteins 6 dienen. Mit dem Nutenstein 6 ist ein Stössel 7 verbunden, der in eine Zylinderkammer 8 (siehe insbesondere Figur 4) in dem Pumpengehäuse 2 eingreift.

In eine Aufnahmerinne 9 des Antriebsbalkens 4 ist eine Zahnstange 10 eingelegt, welche mit einer Mehrzahl von Zahnrädern 11 zusammenwirkt. Jedes Zahnrad 11 ist mit einem Drehkolben 12 drehfest verbunden, der sich gegenüber dem Stössel 7 in dem Pumpengehäuse 2 befindet. Der Drehkolben 12 kann in dem Pumpengehäuse 2 um eine Drehachse D gedreht werden, die in der Längsachse A des Pumpengehäuses 2 verläuft. Ebenso liegt eine Achse B des Stössels 7 in der Längsachse A des Pumpengehäuses 2.

Die Funktionsweise der vorliegenden Erfindung ist folgende:
Eine fliessfähige Masse, beispielsweise eine Schokoladenmasse, wird durch eine Eintrittsöffnung 13 in das Pumpengehäuse 2 bzw. die Zylinderkammer 8 eingebracht. Hierzu befindet sich der Drehkolben 12 in seiner in Figur 3 gezeigten Gebrauchslage, in der er die Eintrittsöffnung 13 freigibt, während er eine Austrittsöffnung 14 verschliesst. Dabei weist der Drehkolben 12 gegenüber dem Stössel 7 eine Stirnkante 15 auf, die, wie in Figur 1 erkennbar, hufeisenartig ausgeformt ist. Von jeweils einer freien Ecke 16 der Stirnkante 15 erstreckt sich etwa waagrecht nach hinten eine Seitenkante 17, so dass sich im Inneren des Drehkolbens 12 eine muschelartige Innenwölbung 18 ergibt. Ein entsprechendes Wölbungsdach 19 ist in seiner Aussenkontur einer Innenkontur der Zylinderkammer 8 angepasst und überdeckt so, je nach Drehung des Drehkolbens 12 entweder die Eintrittsöffnung 13 oder die Austrittsöffnung 14. Beim Drehen des Drehkolben 12 in die eine oder andere Gebrauchslage schneidet die Seitenkante 17 jeweils einen Strang der fliessfähigen Masse, die durch die Eintrittsöffnung 13 ein bzw. durch die Austrittsöffnung 14 austritt, ab.

Befindet sich der Drehkolben 12 in der in Figur 3 gezeigten Gebrauchslage, wird nur die Zylinderkammer 8 vergrössert, indem der Hubbalken 3 in Zugrichtung x bewegt wird. Hierdurch saugt der Stössel 7 die fliessfähige Masse durch die Eintrittsöffnung 13 in das Innere der Zylinderkammer 8, so dass durch den Stössel 7 ein genaues Volumen in die Zylinderkammer 8 eindosiert werden kann. Ist das gewünschte Volumen der fliessfähigen Masse in der Zylinderkammer 8 vorhanden, wird der Drehkolben 12 durch ein Bewegen der Zahnstange 10 in Richtung y um 180° gedreht, so dass er gemäss Figur 4 die Eintrittsöffnung 13 verschliesst, dagegen die Austrittsöffnung 15 öffnet.

Nunmehr wird der Hubbalken 3 entgegen der Richtung x bewegt, so dass der Stössel 7 die fliessfähige Masse aus der Zylinderkammer 8 ausdrückt, wobei durch die muschelartige Innenwölbung 18, welche auf die Austrittsöffnung 14 hinweist, die fliessfähige Masse sehr schnell und ohne grosse zusätzliche Druckbeaufschlagung des Stössels 7 aus der Zylinderkammer 8 ausgedrückt wird.

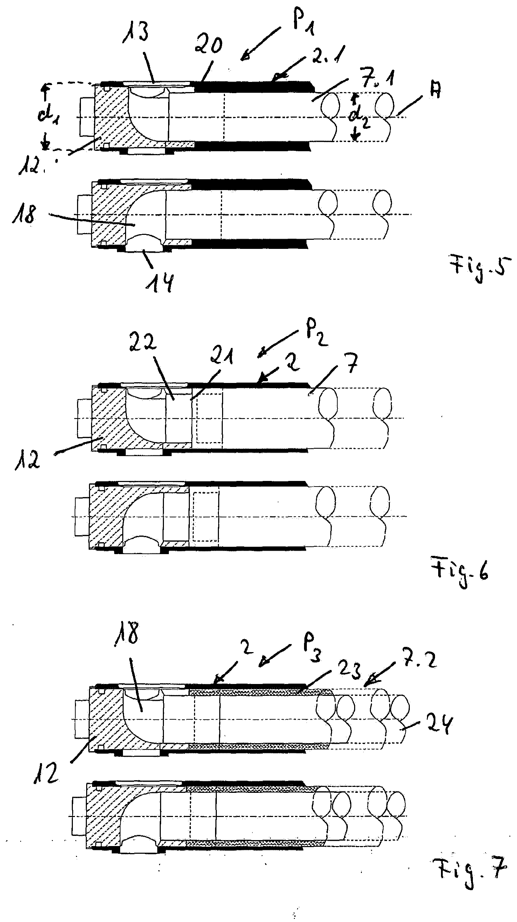

In Figur 5 ist ein weiteres Ausführungsbeispiel einer erfindungsgemässen Pumpe P1 in zwei unterschiedlichen Gebrauchslagen gezeigt. In einem Pumpengehäuse 2.1 befindet sich gleitbar entlang der Längsachse A der Stössel 7. Diesem ist ein Drehkolben 12.1 zugeordnet, der einen Aussendurchmesser d1 besitzt, der dem Innendurchmesser des Pumpengehäuses 2.1 bis zu einer im Inneren des Pumpengehäuses 2.1 ausgeformten Ringkante 20 besitzt. Danach verjüngt sich durch die Ringkante 20 der Innendurchmesser des Gehäuses 2.1 und entspricht einem Aussendruchmesser d2 des Stössels 7. Wie deutlich in Figur 5 erkennbar, hat auf diese Weise der Stössel 7 die Möglichkeit, tief in die Innenwölbung 18 des Drehkolbens 12.1 einzudringen, so dass wesentlich mehr fliessfähige Masse aus der Austrittsöffnung 14 ausgeschoben werden kann und zudem mögliche unerwünschte Aufbauten in Toträumen der Innenwölbung 18 zerstört werden.

Einem ähnlichen Ziel dienen auch die Ausgestaltungen der Pumpen P2 und P3 nach den Figuren 6 und 7. Bei der Ausführungsform nach Figur 6 ist dem Stössel 7, der demjenigen nach den Figuren 3 und 4 entspricht, auf seiner Stirnfläche 21 noch zusätzlich ein zylindrischer Aufsatz 22 aufgesetzt, der wiederum auch das Volumen in der Innenwölbung 18 verkleinert.

Nach dem Ausführungsbeispiel gemäss Figur 7, welches demjenigen nach Figur 5 ähnelt, wird die Ringkante in dem Pumpengehäuse 2 durch eine separate Einschubhülse 23 gebildet. Selbstverständlich kann diese Einschubhülse 23 auch als Teil eines Gesamtstössels 7.2 angesehen werden und in dem Pumpengehäuse 2 gleiten. In diesem Fall besteht der Stössel 7.2 aus einem Aussenstössel 23 und einem Innenstössel 24. Dieser Innenstössel 24 weist einen Aussendurchmesser ähnlich dem Stössel 7.1 in Figur 5, so dass er in die Innenwölbung 18 des Drehkolbens 12 eingreifen kann.

**Bezugszeichenliste**

| | | | | | |
|---|---|---|---|---|---|
| 1 | Pumpenorgel | 34 | | 67 | |
| 2 | Pumpengehäuse | 35 | | 68 | |
| 3 | Hubbalken | 36 | | 69 | |
| 4 | Antriebsbalken | 37 | | 70 | |
| 5 | Nut | 38 | | 71 | |
| 6 | Nutenstein | 39 | | 72 | |
| 7 | Stössel | 40 | | 73 | |
| 8 | Zylinderkammer | 41 | | 74 | |
| 9 | Aufnahmerinne | 42 | | 75 | |
| 10 | Zahnstange | 43 | | 76 | |
| 11 | Zahnstange | 44 | | 77 | |
| 12 | Drehkolben | 45 | | 78 | |
| 13 | Eintrittsöffnung | 46 | | 79 | |
| 14 | Austrittsöffnung | 47 | | | |
| 15 | Stirnkante | 48 | | | |
| 16 | Ecke | 49 | | A | Längsachse |
| 17 | Seitenkante | 50 | | B | Achse |
| 18 | Innenwölbung | 51 | | | |
| 19 | Wölbungsdach | 52 | | | |
| 20 | Ringkante | 53 | | x | Zugrichtung |
| 21 | Stirnfläche | 54 | | y | Bewegung von 10 |
| 22 | Aufsatz | 55 | | | |
| 23 | Einschubhülsen | 56 | | d1 | Durchmesser von 12 |
| 24 | Innenstössel | 57 | | d2 | Durchmesser von 7.1 |
| 25 | Mantelfläche | 58 | | | |
| 26 | | 59 | | D | Drehachse |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum dosierten Zuführen einer fliessfähige Masse, insbesondere einer fetthaltigen Masse zur Herstellung von Produkten im Confiseriebereich, beispielsweise zu einer Düse zum Ausbringen der Masse in eine Form, wobei die Masse durch eine Eintrittsöffnung (13) in eine Kammer (8) gelangt, aus der sie mittels eines Stössels (7, 7.1, 7.2) durch eine Austrittsöffnung (14) ausbringbar ist, und wobei dem Stössel (7) ein Drehkolben (12) zugeordnet ist, welcher in einer Gebrauchslage die Austrittsöffnung (14) und in einer weiteren Gebrauchslage die Eintrittsöffnung (13) verschliesst und eine Ausnehmung (16 bis 19) aufweist, die von einer Stirnkante (15) des Drehkolbens (12) zu seiner Mantelfläche hin verläuft, wobei sich Stössel (7) und Drehkolben (12) in einem ortsfest gelagerten Pumpengehäuse (2) bewegen, welches auch die Eintritts- bzw. Austrittsöffnungen (13,14) aufweist, wobei dem Drehkolben (12) ein Drehantrieb (10,11) zugeordnet ist, wobei an den Drehkolben (12) ein Zahnrad (11) anschliesst, welches mit einer bewegbaren Zahnstange (10) in Eingriff steht, wobei die Vorrichtung eine Mehrzahl von nebeneinander liegend angeordneten Pumpengehäusen (2) aufweist, wobei jeder Drehkolben (12) ein Zahnrad (11) aufweist, welches mit der bewegbaren Zahnstange (10) in Eingriff steht, wobei jeweils die Ausnehmung (16 bis 19) als offener Schlitz ausgebildet und eine dem Stössel (7) gegenüberliegende Stirnkante (15) des Drehkolbens (12) hufeisenartige gekrümmt und schneidenartig angefast ist, wobei von den Ecken (16) der Stirnkante (15) nach hinten schneidenartig angefaste und sich vereinigende Seitenkanten (17) verlaufen, wobei sich an die Stirnkante (15) eine muschelartige Innenwölbung (18) anschliesst, auf die ein Zylinderabschnitt folgt.

2. Vorrichtung nach Anspruch 1, **dadurch gekennzeichnet, dass** eine Drehachse (D) des Drehkolbens (12) in einer Achse (B) des Stössels (7, 7.1, 7.2) verläuft.

3. Vorrichtung nach Anspruch 2, **dadurch gekennzeichnet, dass** die Drehächse (D) des Drehkolbens (12) und die Achse (B) des Stössels (7, 7.1, 7.2) in einer Längsachse (A) einer Kammer (8) eines Pumpengehäuses (2, 2.1) verlaufen.

4. Vorrichtung nach wenigstens einem der vorhergehenden Ansprüche , **dadurch gekennzeichnet, dass** die Seitenkanten (17) der muschelartigen Innenwölbung (18) von der Stirnkante (15) weg zum grossen Teil lineare und horizontal verlaufen.

5. Vorrichtung nach wenigstens einem der vorhergehenden Ansprüche , **dadurch gekennzeichnet, dass** die Seitenkanten (17) vor allem im Bereich der Eintritts- bzw. Austrittsöffnung (13,14) angeordnet sind.

6. Vorrichtung nach wenigstens einem der vorhergehenden Ansprüche, **dadurch gekennzeichnet, dass** der Stössel (7.1, 7.2) oder ein Teil (22, 24) von ihm zumindest teilweise in die Ausnehmung (16 bis 19) eingreift.

7. Vorrichtung nach Anspruch 6, **dadurch gekennzeichnet, dass** eine Stirnfläche (21) des Stössels (7) einen Aufsatz (22) aufweist.

8. Vorrichtung nach Anspruch 6 oder 7, **dadurch gekennzeichnet, dass** das Pumpengehäuse (2.1) im Inneren eine Ringkante (20) ausbildet, an der die Stirnkante (15) des Drehkolbens (12) anliegt, wobei der Drehkolben (12) einen Aussendurchmesser (d1) aufweist, der dem Innendurchmesser der Kammer (8) in dem Pumpengehäuse (2.1) vor der Ringkante (20) entspricht, und der Stössel (7.1) einen Aussendurchmesser (d2) aufweist, der dem Innendurchmesser der Kammer (8) in dem Pumpengehäuse (2.1) nach der Ringkante (20) entspricht.

9. Vorrichtung nach Anspruch 8, **dadurch gekennzeichnet, dass** die Ringkante durch eine Hülse (23) gebildet ist.

10. Vorrichtung nach wenigstens einem der Ansprüche 6 bis 9, **dadurch gekennzeichnet, dass** der Stössel (7.2) aus einem Aussenstössel (23) und einem Innenstössel (24) besteht.

11. Vorrichtung nach Anspruch 9 oder 10, **dadurch gekennzeichnet, dass** der Stössel (7, 7.1, 7.2) linear in Richtung der Längsachse (A) des Pumpengehäuses (2, 2.1) bewegbar ist.

12. Vorrichtung nach wenigstens einem der Ansprüche 1 bis 11, **dadurch gekennzeichnet, dass** eine Mehrzahl von Stössel (7) nebeneinander liegend angeordnet und mit einem Hubbalken (3) verbunden sind, über den die Stössel (7) linear bewegbar sind.

## Claims

1. A device for the metered supply of a flowable mass, in particular a fat-containing mass for the production of confectionary products, for example to a nozzle for discharging the mass into a mould, wherein the mass makes its way through an inlet opening (13) into a chamber (8) from which it may be discharged through an outlet opening (14) by means of a plunger (7, 7.1, 7.2), and wherein a rotary piston (12) is associated with the plunger (7), which rotary piston closes the outlet opening (14) in one position of use and closes the inlet opening (13) in a further position of use and has a recess (16 to 19) which extends from a front edge (15) of the rotary piston (12) to its lateral surface, wherein the plunger (7) and the rotary piston (12) move in a pump housing (2), which is mounted in a stationary manner and also has the inlet and outlet openings (13, 14), wherein a rotary drive (10, 11) is associated with the rotary piston (12), wherein a gear wheel (11) adjoins the rotary piston (12), which gear wheel is in engagement with a movable gear rack (10), wherein the device has a plurality of pump housings (2) arranged adjacent to one another, wherein each rotary piston (12) has a gear wheel (11) which is in engagement with the movable gear rack (10), wherein the recess (16 to 19) is formed as an open slot in each case and a front edge (15) of the rotary piston (12), opposite the plunger (7), is curved in the manner of a horseshoe and chamfered in the manner of a cutting edge, wherein rearwardly conjoined lateral edges (17), which are chamfered in the manner of a cutting edge, extend from the corners (16) of the front edge (15), wherein a shell-like concavity (18), which is followed by a cylindrical portion, adjoins the front edge (15).

2. The device according to Claim 1, **characterised in that** an axis of rotation (D) of the rotary piston (12) extends in an axis (B) of the plunger (7, 7.1, 7.2).

3. The device according to Claim 2, **characterised in that** the axis of rotation (D) of the rotary piston (12) and the axis (B) of the plunger (7, 7.1, 7.2) extend in a longitudinal axis (A) of a chamber (8) of a pump housing (2, 2.1).

4. The device according to at least one of the preceding claims, **characterised in that** the lateral edges (17) of the shell-like concavity (18) extend to a large extent linearly and horizontally away from the front edge (15).

5. The device according to at least one of the preceding claims, **characterized in that** the lateral edges (17) are arranged predominantly in the region of the inlet and outlet opening (13, 14).

6. The device according to at least one of the preceding claims, **characterised in that** the plunger (7.1, 7.2) or a part (22, 24) thereof engages at least partially in the recess (16 to 19).

7. The device according to Claim 6, **characterised in that** an end face (21) of the plunger (7) has an attachment (22) .

8. The device according to Claim 6 or 7, **characterised in that** the pump housing (2.1) forms an annular edge (20) in the interior, against which the front edge (15) of the rotary piston (12) abuts, wherein the rotary piston (12) has an external diameter (d1) which corresponds to the internal diameter of the chamber (8) in the pump housing (2. 1) upstream of the annular edge (20), and the plunger (7.1) has an external diameter (d2) which corresponds to the internal diameter of the chamber (8) in the pump housing (2.1) downstream of the annular edge (20).

9. The device according to Claim 8, **characterised in that** the annular edge is formed by a sleeve (23).

10. The device according to at least one of Claims 6 to 9, **characterised in that** the plunger (7.2) comprises an outer plunger (23) and an inner plunger (24).

11. The device according to Claim 9 or 10, **characterised in that** the plunger (7, 7.1, 7.2) is linearly movable in the direction of the longitudinal axis (A) of the pump housing (2, 2.1).

12. The device according to at least one of Claims 1 to 11, **characterised in that** a plurality of plungers (7) are arranged adjacent to one another and are connected to a lifting bar (3) via which the plungers (7) are linearly movable.

## Revendications

1. Dispositif permettant l'amenée dosée d'une masse fluide, en particulier d'une masse graisseuse pour la fabrication de produits dans le domaine de la confiserie, par exemple à une buse permettant la distribution de la masse dans un moule, la masse passant par une ouverture d'entrée (13) dans une chambre (8) à partir de laquelle elle peut être distribuée à travers une ouverture de sortie (14) au moyen d'un poussoir (7, 7.1, 7.2), et le poussoir (7) étant associé à un piston rotatif (12) qui ferme l'ouverture de sortie (14) dans une position d'utilisation et ferme l'ouverture d'entrée (13) dans une autre position d'utilisation, et présente un évidement (16 à 19) qui s'étend depuis un bord avant (15) du piston rotatif (12) jusqu'à sa surface extérieure, le poussoir (7) et le piston rotatif (12) se déplaçant dans un corps de pompe stationnaire (2) qui présente également les ouvertures d'entrée et de sortie (13, 14), un entraînement rotatif (10, 11) étant associé au piston rotatif (12), une roue dentée (11) étant raccordée au piston rotatif (12) et mise en prise avec une crémaillère mobile (10), le dispositif présentant une pluralité de corps de pompe (2) disposés côte à côte, chaque piston rotatif (12) présentant une roue dentée (11) mise en prise avec la crémaillère mobile (10), respectivement l'évidement (16 à 19) étant réalisé sous la forme d'une fente ouverte et un bord avant (15) du piston rotatif (12) opposé au poussoir (7) étant courbé en fer à cheval et chanfreiné en arête de coupe, des bords latéraux (17) chanfreinés vers l'arrière en arête de coupe et convergents s'étendant à partir des coins (16) du bord avant (15), une courbure intérieure en forme de coquille (18) étant raccordée au bord avant (15), laquelle courbure étant suivie par une section de cylindre.

2. Dispositif selon la revendication 1, **caractérisé par le fait qu'**un axe de rotation (D) du poussoir rotatif (12) s'étend dans un axe (B) du poussoir (7, 7.1, 7.2).

3. Dispositif selon la revendication 2, **caractérisé par le fait que** l'axe de rotation (D) du poussoir rotatif (12) et l'axe (B) du poussoir (7, 7.1, 7.2) s'étendent dans un axe longitudinal (A) d'une chambre (8) d'un boîtier de pompe (2, 2.1).

4. Dispositif selon au moins l'une des revendications précédentes, **caractérisé par le fait que** les bords latéraux (17) du bombage intérieur en forme de coquille (18) s'étendent en grande partie de manière linéaire et horizontale en s'éloignant du bord avant (15).

5. Dispositif selon au moins l'une des revendications précédentes, **caractérisé par le fait que** les bords latéraux (17) sont disposés surtout dans la zone de l'ouverture d'entrée ou de sortie (13, 14).

6. Dispositif selon au moins l'une des revendications précédentes, **caractérisé par le fait que** le poussoir (7.1, 7,2) ou une partie (22, 24) de celui-ci s'engage au moins partiellement dans l'évidement (16 à 19).

7. Dispositif selon la revendication 6, **caractérisé par le fait qu'**une face avant (21) du poussoir (7) présente une rehausse (22).

8. Dispositif selon la revendication 6 ou 7, **caractérisé par le fait que** le boîtier de pompe (2.1) forme à l'intérieur un bord annulaire (20) contre lequel s'appuie le bord avant (15) du poussoir rotatif (12), dans lequel le poussoir rotatif (12) présente un diamètre extérieur (d1) qui correspond au diamètre intérieur de la chambre (8) dans le boîtier de pompe (2.1) avant le bord annulaire (20), et le poussoir (7.1) présente un diamètre extérieur (d2) qui correspond au diamètre intérieur de la chambre (8) dans le boîtier de la pompe (2.1) après le bord annulaire (20).

9. Dispositif selon la revendication 8, **caractérisé par le fait que** le bord annulaire est constitué par un manchon (23).

10. Dispositif selon au moins l'une des revendications 6 à 9, **caractérisé par le fait que** le poussoir (7.2) est constitué d'un poussoir extérieur (23) et d'un poussoir intérieur (24).

11. Dispositif selon la revendication 9 ou 10, **caractérisé par le fait que** le poussoir (7, 7.1, 7.2) peut se déplacer linéairement en direction de l'axe longitudinal (A) du boîtier de pompe (2, 2.1).

12. Dispositif selon au moins l'une des revendications 1 à 11, **caractérisé par le fait qu'**une pluralité de poussoirs (7) sont disposés côte à côte et connectés à une poutre de levage (3) par l'intermédiaire de laquelle les poussoirs (7) sont déplaçables linéairement.
